Europäisches Patentamt

European Patent Office

Office européen des brevets

(11) Veröffentlichungsnummer: **0 497 147 A2**

# (12) EUROPÄISCHE PATENTANMELDUNG

(21) Anmeldenummer: **92100598.9**

(22) Anmeldetag: **15.01.92**

(51) Int. Cl.5: **G05B 9/03**

(30) Priorität: **28.01.91 DE 4102444**

(43) Veröffentlichungstag der Anmeldung:
**05.08.92 Patentblatt 92/32**

(84) Benannte Vertragsstaaten:
**DE FR NL**

(71) Anmelder: **SIEMENS AKTIENGESELLSCHAFT**
**Wittelsbacherplatz 2**
**W-8000 München 2(DE)**

(72) Erfinder: **Daar, Horst, Dr.**
**Friedrich-Bauer-Strasse 30**
**W-8520 Erlangen(DE)**
Erfinder: **Schütz, Hartmut, Dipl.-Ing.**
**Friedhofstrasse 6**
**W-8551 Heroldsbach(DE)**

(54) **Redundantes Automatisierungssystem.**

㊼ Verfahren zum Betreiben eines programmgesteuerten, redundant mit zwei Teilgeräten (AG,AG') aufgebauten Automatisierungsgeräts, insbesondere für eine Brenneranlage, mit zwei identischen Programmabläufen, wobei spätestens nach Ablauf einer vom Benutzer vorwählbaren Zeit (T) eine gegenseitige Synchronisation der Programmabläufe erfolgt.

FIG 1

EP 0 497 147 A2

Die Erfindung betrifft ein Verfahren zum Betreiben eines programmgesteuerten, redundant mit zwei Teilgeräten aufgebauten Automatisierungsgeräts, insbesondere für eine Brenneranlage, mit zwei identischen Programmabläufen.

Ein derartiges Verfahren ist beispielsweise aus der DE-OS 36 33 953 bekannt. Bei diesem Verfahren werden die beiden Teilgeräte bei Vorliegen vorwählbarer Ereignisse sychronisiert. Dieses Verfahren ist noch nicht ganz optimal, weil die Synchronisation im Regelfall vom Benutzer angestoßen wird. Der Benutzer muß also durch entsprechend häufiges Aufrufen von Betriebssystemfunktionen dafür sorgen, daß bestimmte, prozeßabhängige Alarmreaktionszeiten nicht überschritten werden.

Aufgabe der vorliegenden Erfindung ist es, auf einfache und effektive Weise die Einhaltung der Alarmreaktionszeiten sicherzustellen.

Die Aufgabe wird dadurch gelöst, daß spätestens nach Ablauf einer vom Benutzer vorwählbaren Zeit eine gegenseitige Synchronisation der Programmabläufe erfolgt.

Mit Vorteil erfolgt die Synchronisation vom Benutzer verdeckt, so daß dieser nur einmal das Synchronisationsraster vorgeben muß und ansonsten sein Anwenderprogramm frei von durch einzuhaltenden Alarmreaktionszeiten verursachten Einschränkungen verwenden kann.

Der Zeitablauf zwischen zwei Synchronisationsvorgängen ist besonders einfach festzustellen, wenn in den Teilgeräten ein Zähler- hoch bzw. heruntergezählt wird und die Synchronisation bei Erreichen eines vorwählbaren Zählerzustandes, z.B. bei Zählerüberlauf bzw. bei Zählerwert Null, erfolgt.

Wenn die Programmabläufe aus Maschinenbefehlen bestehen und der Zähler die ausgeführten Maschinenbefehle zählt, ist gewährleistet, daß die Synchronisation stets an gleichen Befehlsgrenzen erfolgt.

Um den Gleichlauf beider Automatisierungssysteme zu gewährleisten, ist es von Vorteil, wenn zwischen zwei Synchronisationen die Abarbeitung aller Unterbrechungen (Interrupts) der Programmabläufe gesperrt sind.

Weiter Vorteile und Einzelheiten ergeben sich aus den weiteren Ansprüchen, anhand der nachfolgenden Beschreibung eines Ausführungsbeispiels und in Verbindung mit den Zeichnungen. Es zeigen:

FIG 1 ein Blockschaltbild eines Automatisierungsgeräts,

FIG 2 die Auswirkungen der Synchronisierung auf die Anwenderprogramme und

FIG 3 das Schema des Synchronisierungsverfahrens.

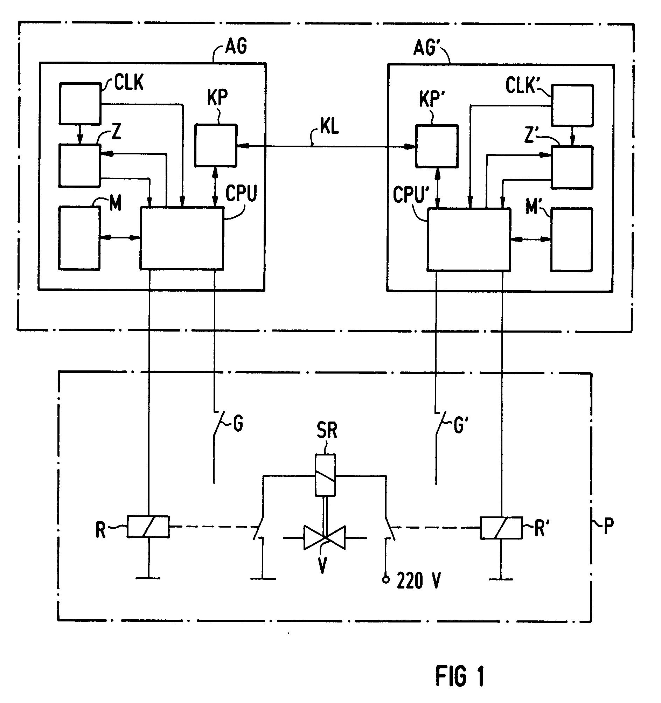

Gemäß FIG 1 besteht jedes der Automatisierungsgeräte AG, AG' aus je einer Zentraleinheit CPU, CPU' und einem Speicher M, M'. Die Synchronisation der beiden Automatisierungsgeräte AG, AG' erfolgt über die Kommunikationsprozessoren KP, KP' und die Kommunikationsleitung KL. Weiterhin weist jedes der Teilgeräte AG, AG' einen Taktgenerator CLK, CLK' zur Erzeugung des Systemtaktes sowie einen Zähler Z, Z' auf. Auf die Funktion der Zähler Z, Z' wird weiter unten noch näher eingegangen werden.

Wie aus FIG 1 weiterhin ersichtlich ist, steuern die Geräte AG, AG' gemeinsam einen technischen Prozeß P, indem sie beispielsweise Relais R, R' betätigen oder Geber G, G' auswerten. Die Relais R, R' können beispielsweise ein Schaltrelais SR auslösen, das ein Ventil V einer Brenneranlage öffnet bzw. schließt. Die Geber G, G' beispielsweise können den Schaltzustand des Schaltrelais SR an die Teilgeräte AG, AG' melden.

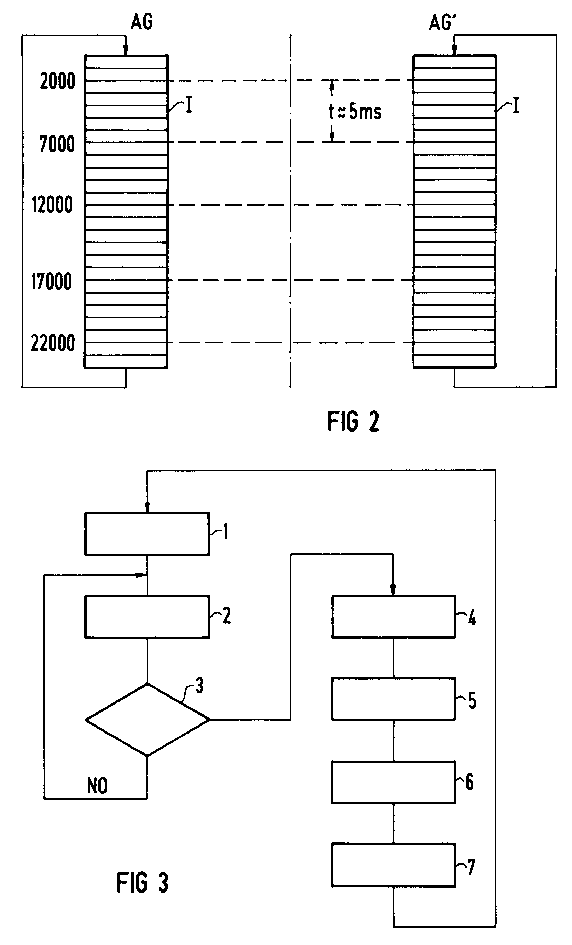

FIG 2 zeigt das Schema der Synchronisation zwischen den Teilgeräten AG, AG'. Gemäß FIG 2 führen die Geräte AG, AG' identische Programme aus. Nach jeweils spätestens der Zeit T, hier fünf Millisekunden, synchronisieren sich die Programmabläufe in den beiden Teilgeräten AG, AG'. Das Synchronisationsraster ist dabei derart gewählt, daß es kleiner als die minimal benötigte Alarmreaktionszeit des Automatisierungsgeräts ist. Die Synchronisation selbst nimmt - vom Benutzer verdeckt - das Betriebssystem vor. Interrupts I bzw. I', die in den Programmabläufen an beliebiger Stelle auftreten können, werden nur registriert, aber nicht abgearbeitet.

Um eine derartige Synchronisation zu erreichen, wird zunächst im Funktionsbaustein 1 der Zähler Z gleich dem Wert $Z_0$ gesetzt. Dieser Zahlenwert $Z_0$ wird vom Benutzer indirekt am Beginn seines Programms eingegeben bzw. festgelegt. Danach braucht sich der Benutzer nicht mehr um die Sychronisation zu kümmern. Der Wert $Z_0$ errechnet sich als Produkt aus gewünschtem Synchronisationsraster und dem von den Taktgebern CLK, CLK' gelieferten Takt dividiert durch die maximale Zahl von Taktzyklen pro Maschinenbefehl. Bei einem Takt von 12 MHz, maximal 12 Taktzyklen pro Maschinenbefehl und einem gewünschten Synchronisationsraster von 5 ms wäre der Wert $Z_0$ beispielsweise gleich 5 000.

Danach wird nach jeden ausgeführten Maschinenbefehl im Funktionsbaustein 2 der Wert des Zählers Z um 1 erniedrigt, bis der Wert des Zählers Z den Wert Null erreicht. Das Erreichen des Wertes Null wird im Funktionsbaustein 3 abgeprüft und löst den Synchronisationsvorgang im Gerät AG aus. Gleiches geschieht analogerweise aufgrund des Wertes des Zählers Z' im Gerät AG'. Nach der Synchronisation im Funktionsbaustein 4 wird im Funktionsbaustein 5 die Abarbeitung der Prozeßinterrupts I, I' freigegeben, worauf im Funktionsbaustein 6 die Interrupts I, I' abgearbeitet werden. Nach dem Abarbeiten der Interrupts I, I' wird die Abarbeitung der Interrupts I, I' im Funktionsbaustein 7 wieder gesperrt. Der Wert des Zählers Z wird wieder auf den Wert $Z_0$ gesetzt und der Vorgang beginnt von Neuem.

**Patentansprüche**

1. Verfahren zum Betreiben eines programmgesteuerten, redundant mit zwei Teilgeräten aufgebauten Automatisierungsgeräts, insbesondere für eine Brenneranlage, mit zwei identischen Programmabläufen, **dadurch gekennzeichnet**, daß spätestens nach Ablauf einer vom Benutzer vorwählbaren Zeit (T) eine gegenseitige Synchronisation der Programmabläufe erfolgt.

2. Verfahren nach Anspruch 1, **dadurch gekennzeichnet**, daß die Synchronisation vom Benutzer verdeckt erfolgt.

3. Verfahren nach Anspruch 1 oder 2, **dadurch gekennzeichnet**, daß zur Feststellung des Zeitablaufs in den Teilgeräten (AG,AG') ein Zähler (Z,Z') hoch- bzw. heruntergezählt wird und die Synchronisation bei Erreichen eines vorwählbaren Zählerzustandes, z.B. bei Zählerüberlauf bzw. bei Zählerwert Null, erfolgt.

4. Verfahren nach Anspruch 3, **dadurch gekennzeichnet**, daß die Programmabläufe aus Maschinenbefehlen bestehen und der Zähler die ausgeführten Maschinenbefehle zählt, so daß die Synchronisation stets an gleichen Befehlsgrenzen erfolgt.

5. Verfahren nach Anspruch 1, 2, 3 oder 4, **dadurch gekennzeichnet**, daß zwischen zwei Synchronisationen die Abarbeitung aller Unterbrechungen der Programmabläufe gesperrt ist.

6. Verfahren nach Anspruch 1, 2, 3, 4 oder 5, **dadurch gekennzeichnet**, daß die Programmabläufe in Betriebssysteme und Anwenderprogramme aufgeteilt sind und das Betriebssystem die Synchronisation vornimmt.

7. Verfahren nach Anspruch 1, 2, 3, 4, 5 oder 6, **dadurch gekennzeichnet**, daß die Zeit (T) zwischen zwei Synchronisationsvorgängen kleiner als die erforderliche Alarmreaktionszeit ist.

FIG 1

AG

AG'

2000

7000

12000

17000

22000

I

I

t ≈ 5ms

FIG 2

FIG 3

1

2

3

NO

4

5

6

7